# EUROPEAN PATENT SPECIFICATION

(11) **EP 2 657 160 B1**
(45) Date of publication and mention of the grant of the patent: **26.11.2014**
(21) Application number: 12165710.0
(22) Date of filing: 26.04.2012
(51) Int. Cl.: B65G 51/04, B65G 51/06

(54) **Pneumatic dispatch cartridge and apparatus for unloading it**
Rohrpostkartusche und Vorrichtung zum Entladen davon
Cartouche à distribution pneumatique et appareil de déchargement de celle-ci

(43) Date of publication of application: 30.10.2013
(73) Proprietor: Swisslog-Ergotrans B.V., 7324 AL Apeldoorn (NL)
(72) Inventor: Dragt, Jan-Coen, 7323 AG Apeldoorn (NL); Beltman, Frederik Antonie, 7437 GA Bathmen (NL)
(74) Representative: De Vries & Metman

(56) References cited:
- EP-A2- 0 469 390
- EP-A2- 0 919 281
- WO-A1-2011/078762
- CH-A- 261 249
- US-A- 3 072 362
- US-A- 4 362 443
- US-A- 6 062 398

## Description

The invention firstly relates to a pneumatic dispatch cartridge, comprising a substantially tubular body for receiving goods to be transported, which body comprises two opposite frontal faces of which at least one is provided with an access opening for loading/unloading goods into/from the tubular body, and a cover member which is movable between a closed position for closing said access opening and an open position for freeing said access opening, wherein within said tubular body at least one smaller tubular channel member is provided extending substantially in parallel to the longitudinal axis of the tubular body, for receiving therein at least one blood sample tube. Such a cartridge is known from US-A-3 072 362, in which each tubular channel member is meant for housing a single vial.

Pneumatic dispatch cartridges of such a type are well-known and are used for conveying goods in a pneumatic dispatch system.

It is an object to provide an improved pneumatic dispatch cartridge of such a type.

In accordance with the present invention, the pneumatic dispatch cartridge is characterized in that the tubular channel member is provided with clamping means for in a clamping manner holding said blood sample tube in said tubular channel member, wherein the length of the tubular channel member at least is substantially twice the length of a blood sample tube to be received therein, and wherein the tubular channel member is provided with two clamping means spaced such that, on one hand, these clamping means engage different ones of two blood sample tubes, when both received in the tubular channel member and, on the other hand, at least one of said clamping means will engage a single blood sample tube, when received alone in the tubular channel member, irrespective the position of said single blood sample tube within said tubular channel member.

For optimising the capacity of a pneumatic dispatch system, the diameter of the tubular body generally will be maximised with respect to the inner diameter of pipes of the pneumatic dispatch system (which generally lies between 10 and 16 cm). As a result the inner diameter of the tubular body will be much greater than the outer diameter of a blood sample tube (which generally lies between 12 and 15 mm). By providing a smaller tubular channel member a blood sample tube may be received within the tubular body in a more safe manner. In combination with the clamping means a stable position of the blood sample tube within the tubular body is obtained, reducing the risk on breakage of the tube and contamination of the surroundings with blood and/or (glass) fragments of the blood sample tube.

Further, according to the invention the relation between the length of a blood sample tube (for example 10 cm) and the length of the tubular channel member (for example at least substantially 20 cm) and the position of the two clamping means is such that, irrespective whether one or two blood sample tubes are received in said tubular channel member, it is always certain that each blood sample tube will be engaged by a clamping means, such that loading the tube(s) into the tubular channel member may be carried out quickly without having to strive for a specific position of such tube(s) within the tubular channel member.

In one embodiment of the pneumatic dispatch cartridge, each clamping means comprises a leaf spring, at least partly extending into the tubular channel member from the surrounding wall thereof and under an acute angle with the longitudinal axis of the tubular channel member.

Such a leaf spring extending under said acute angle allows a simple loading of a blood sample tube into the tubular channel member while pushing the leaf spring aside.

It is conceivable, then, that said leaf spring successively comprises a first part attached to the outside of the surrounding wall, a second part extending into the tubular channel member through an aperture in the surrounding wall and under said acute angle with the longitudinal axis of the tubular channel member, a third part extending back through an aperture in the surrounding wall and under an opposite acute angle with the longitudinal axis of the tubular channel member and a fourth part for engaging the outside of the surrounding wall, wherein the leaf spring is preloaded for pushing the fourth part against the outside of the surrounding wall and wherein the apertures are dimensioned for allowing a movement of the second and third parts relative to the surrounding wall.

The acute angles of the second and third part are opposite, which means that the third part extends back outwardly to the same portion of the surrounding wall from which the second part extends inwardly. These acute angles, apart from being opposite to each other, may or may not have the same magnitude. Initially, the second or third part of the leaf spring will cooperate with a blood sample tube that is loaded into the tubular channel member. Once the blood sample tube is fully loaded, the crest between the second and third parts will engage the blood sample tube.

In one embodiment the apertures are combined to form a single elongate aperture. This simplifies the design of the tubular channel member without impairing its function.

In a preferred embodiment of the pneumatic dispatch cartridge according to the present invention, in said tubular body multiple, and preferably five tubular channel members are provided extending alongside each other.

As a result a number of blood sample tubes may be conveyed in a single pneumatic dispatch cartridge.

In yet a further embodiment of the pneumatic dispatch cartridge, the at least one tubular channel member is defined in an insert positioned within said tubular body.

Such an insert allows a simple adaptation of the pneumatic dispatch cartridge to the specific requirements (for example the number of blood sample tubes that may be loaded into the cartridge). Such an insert may be positioned within said tubular body in a removable manner.

In another embodiment of the pneumatic dispatch cartridge according to the present invention, both frontal faces of the tubular body are provided with an access opening and a corresponding cover member. Then, loading and unloading such a cartridge may be carried out at both frontal faces.

Further it is conceivable, that each cover member is movable between its open and closed positions through a rotation about an axis of rotation extending substantially in parallel to the longitudinal axis of the tubular body and positioned close to the outer circumference of said tubular body. Especially, such an embodiment may prove advantageous when the process of unloading will be automated.

In a second aspect the present invention relates to an apparatus for unloading a pneumatic dispatch cartridge according to the present invention and comprising two access openings with respective cover members and provided with multiple tubular channel members arranged within the tubular body according to a specific pattern.

In accordance with the present invention, such an apparatus is characterized by a movable pusher member comprising a number of pusher rods in correspondence with the number of tubular channel members and arranged in said specific pattern, aligning means for aligning the cartridge with its tubular channel members with the pusher rods, and cover driving means for opening and closing both cover members.

Once the cartridge is aligned by the aligning means and the cover members are opened by the cover driving means, the pusher rods (which will have an outer diameter which is smaller than the inner diameter of the tubular channel members) are pushed in common into one end of the tubular channel members and any blood sample tubes present therein will be discharged from the opposite end of said tubular channel members.

In one embodiment of the apparatus, the pusher member comprises a pusher head in which the pusher rods are mounted in such a manner that when a load on a pusher rod exceeds a threshold value, said pusher rod is disconnected from the pusher head such as to no more move along therewith.

When a blood sample tube is jammed in its respective tubular channel member, the assigned pushing rod will stop moving, thus preventing the blood sample tube from collapsing.

It is possible that the pusher head, once disconnected from the pusher rod, substantially does not transmit a load to said pusher rod. Thus, once a jammed blood sample tube has triggered the disconnect between the pusher head and respective pusher rod, said blood sample tube will be free from any load caused by the pusher rod, minimising the risk of damaging the blood sample tube and contaminating the surroundings (with blood and/or fragments of the tube).

In such a case, it further is conceivable that the apparatus further comprises signalling means for generating a warning signal when the pusher rod is disconnected from the pusher head.

Such a warning signal may attract the attention of an operator who then may take the appropriate action to remove the jammed blood sample tube.

In one embodiment of the apparatus, the aligning means comprise conveyer means for conveying the pneumatic dispatch cartridge in a direction substantially perpendicular to its longitudinal axis.

The advantage of conveying the pneumatic dispatch cartridge in a direction substantially perpendicular to its longitudinal axis is, that it may arrive at the pusher member in an orientation in which it with its tubular channel members already is properly aligned with the pusher rods, such that no additional movements or positional adjustments of the pneumatic dispatch cartridge are required.

It is conceivable that the conveyor means comprise at least a conveyor belt and guide members.

In yet another embodiment the aligning means further may comprise stabilising means for maintaining the pneumatic dispatch cartridge in the aligned position. This ensures that during unloading the relative position between the pusher rods and tubular channel members is maintained, preventing jamming of the pusher rods in said channels. Such stabilising means, for example, may comprise clamping members for engaging the tubular body of the pneumatic dispatch cartridge.

Finally, in one embodiment of the apparatus according to the present invention, the cover driving means comprise stationary tabs engaging the cover members of a pneumatic dispatch cartridge when latter is moved past these tabs by the aligning means. Thus an automatic opening and closing of the cover members is achieved.

Hereinafter the invention will be elucidated by the drawing in which:
Figure 1 schematically and in a perspective view shows a pneumatic dispatch cartridge with one cover member in an open position;
Figure 2 in a perspective view shows a tubular channel member:
Figure 3 shows a side elevational view of the tubular channel member of figure 2;
Figure 4 schematically and in a perspective view shows five tubular channel members combined into an insert, and
Figure 5 schematically illustrates an apparatus for unloading a pneumatic dispatch cartridge.

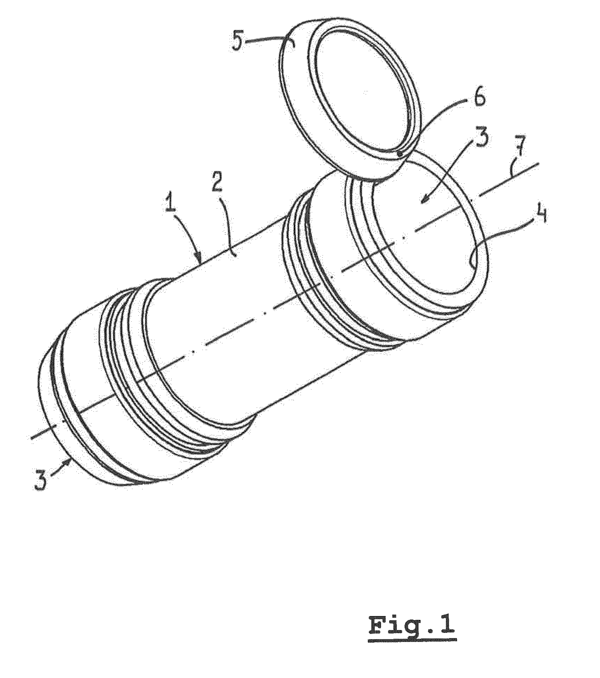

Firstly referring to figure 1 a pneumatic dispatch cartridge 1 is shown, comprising a substantially tubular body 2 for receiving goods to be transported, specifically blood sample tubes. The tubular body 2 comprises two opposite frontal faces 3 which in the present embodiment both are provided with an access opening 4 for loading/unloading goods into/from the tubular body 2. Each access opening is provided with a cover member 5 which is movable between a closed position (illustrated for the lower cover member 5) for closing said access opening 4 and an open position (illustrated for the upper cover member 5) for freeing said access opening 4.

In the illustrated embodiment each cover member 5 is movable between its open and closed positions through a rotation about an axis of rotation 6 extending substantially in parallel to the longitudinal axis 7 of the tubular body 2 and positioned close to the outer circumference of said tubular body. It is noted however, that also other cover members are conceivable (which for example may rotate around other axes or which can be screwed on/off the tubular body 2).

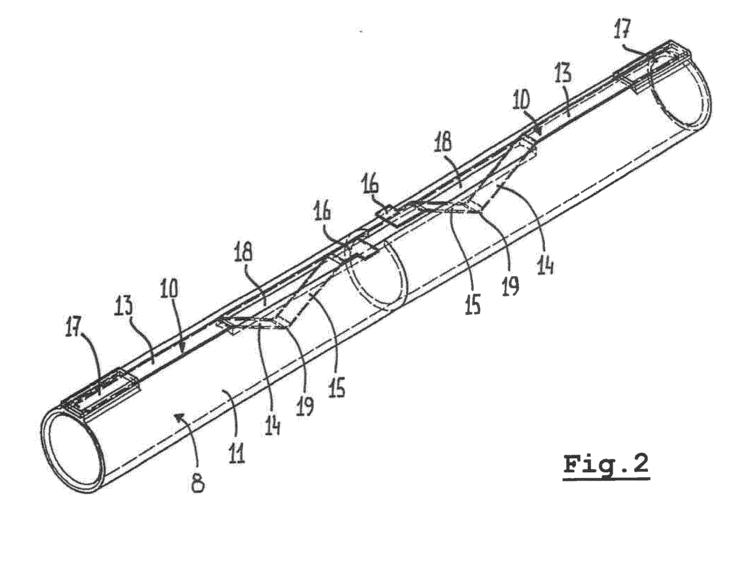

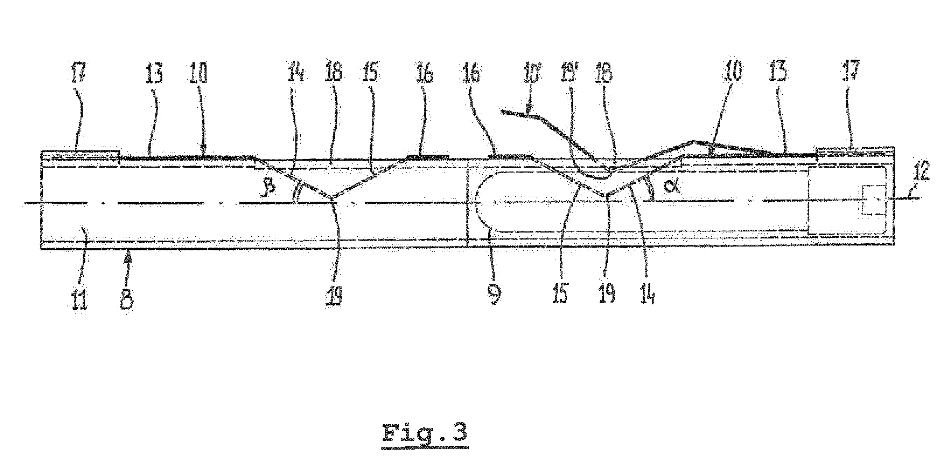

In a manner to be illustrated later, a number of (compared to the tubular body 2) smaller tubular channel members 8 (figures 2 and 3) are provided within said tubular body 2 extending substantially in parallel to the longitudinal axis 7 of the tubular body 2. These tubular channel members 8 are meant for receiving therein at least one blood sample tube 9 (illustrated only in figure 3).

For holding said blood sample tube(s) 9 in said tubular channel member(s) 8 latter is/are provided with two clamping means 10.

In the illustrated embodiment each clamping means comprises a leaf spring 10 which at least partly extends into the tubular channel member 8 from the surrounding wall 11 thereof and under an acute angle with the longitudinal axis 12 of the tubular channel member.

Specifically referring to figure 3 each leaf spring 10 successively comprises a first part 13 attached to a projection 17 at the outside of the surrounding wall 11, a second part 14 extending into the tubular channel member 8 through an aperture 18 in the surrounding wall 11 and under an acute angle α with the longitudinal axis 12 of the tubular channel member, a third part 15 extending back through the aperture 18 in the surrounding wall and under an opposite acute angle β with the longitudinal axis 12 of the tubular channel member and a fourth part 16 for engaging the outside of the surrounding wall 11. The leaf spring 10 is preloaded for pushing the fourth part 16 against the outside of the surrounding wall. The aperture 18 is dimensioned for allowing a movement of the leaf spring 10 (second and third parts 14,15) relative to the surrounding wall 11 between a non active position 10 when no blood sample tube is present and an active position 10' engaging a blood sample tube 9 with a crest 19/19' when a blood sample tube 9 is loaded into the tubular channel member 8.

In the illustrated embodiment of the pneumatic dispatch cartridge 1 the length of the tubular channel member 8 is at least substantially twice the length of a blood sample tube 9 to be received therein (for example about 20 cm versus 10 cm). The two clamping means (leaf springs) 10 are spaced such that, when two blood sample tubes 9 are received in the tubular channel member 8, these clamping means engage different ones of said blood sample tubes. The position of said two clamping means, however, also is such that when only one blood sample tube 9 is received in the tubular channel member 8, at least one of said clamping means 10 will engage said single blood sample tube, irrespective the position of said single blood sample tube within said tubular channel member.

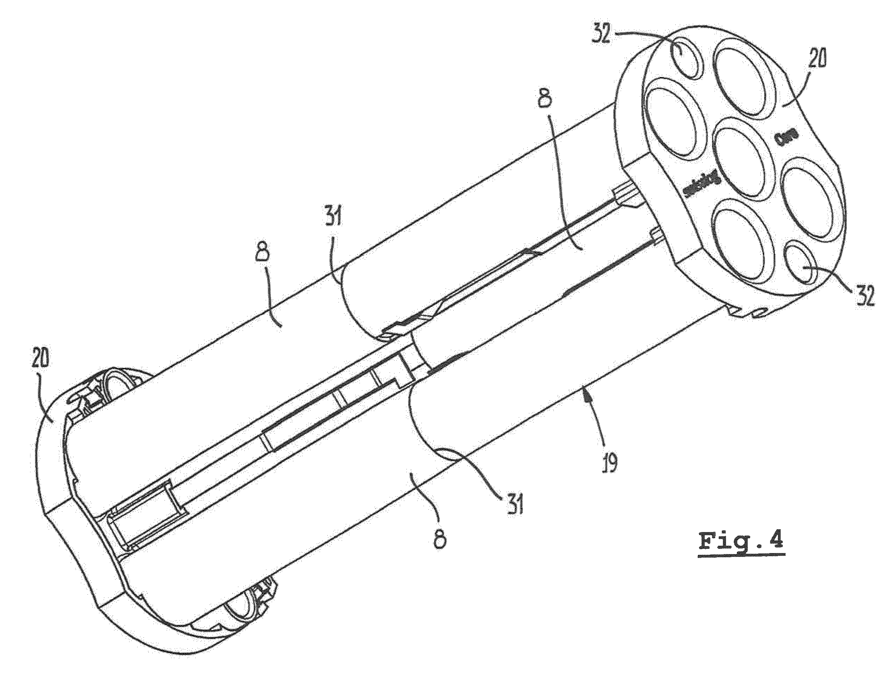

Referring now to figure 4 an insert 19 is shown which is dimensioned to be received within the tubular body 2 of the pneumatic dispatch cartridge 1. In this insert five tubular channel members 8 are provided extending alongside each other between two end plates 20. Each tubular channel member is capable of receiving at least one (and preferably two) blood sample tube 9 and therefore is provided with clamping means 10 as described before (but not shown in this figure).

The design of the insert 19 may be such that it may be positioned within the tubular body 2 in a removable manner. Further, in the illustrated embodiment, the insert 19 is constructed of two halves joined at seams 31.

The insert 19 (and the tubular body 2) at least partly may be manufactured from a transparent material such as to allow a visual inspection of the contents of the pneumatic dispatch cartridge 1 without the need for opening at least one cover member 5.

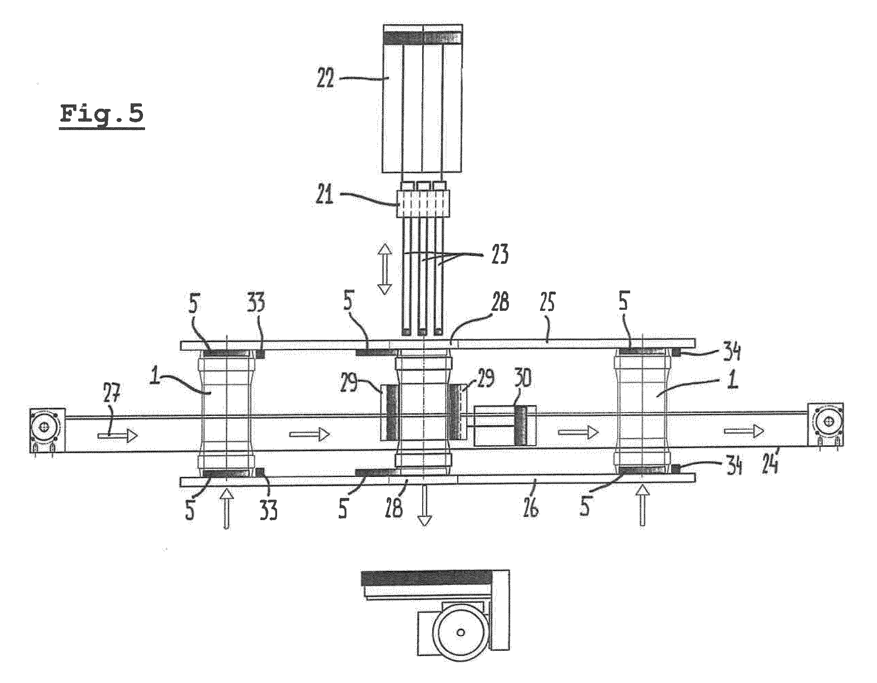

Finally, reference is made to figure 5 which, schematically and in a side elevational view, shows an apparatus for unloading a pneumatic dispatch cartridge 1 according to the present invention and of the type comprising two access openings 4 with respective cover members 5 and provided with multiple tubular channel members 8 arranged within the tubular body 2 according to a specific pattern (for example using an insert 19 as illustrated in figure 4).

The basic design of such an apparatus is characterized by the following three main components (which hereafter will be elucidated individually):
- a movable pusher member comprising a number of pusher rods in correspondence with the number of tubular channel members and arranged in said specific pattern,
- aligning means for aligning the cartridge with its tubular channel members with the pusher rods, and
- cover driving means for opening and closing both cover members.

The pusher member comprises a pusher head 21 (for example driven by a hydraulic or pneumatic cylinder 22) in which pusher rods 23 are mounted in correspondence with the pattern of the tubular channel members 8. Further, each pusher rod 23 is mounted in the pusher head 21 in such a manner that when a load on a pusher rod 23 exceeds a threshold value, said pusher rod is disconnected from the pusher head 21 such as to no more move along therewith (and preferably the pusher head 21, once disconnected from a pusher rod 23, substantially does not transmit a load to said pusher rod). Signalling means (not illustrated) may be provided for generating a warning signal when a pusher rod 23 is disconnected from the pusher head 21.

The aligning means comprise conveyer means (for example a conveyor belt 24 and guide members 25,26) for conveying the pneumatic dispatch cartridge 1 in a direction 27 substantially perpendicular to its longitudinal axis 12. Thus, these aligning means may laterally displace the pneumatic dispatch cartridge 1 starting from a position within a pneumatic dispatch pipe and move it (without the need for further adjusting movements such as rotations or alike) substantially in a straight line to a position between two openings 28 in the guide members 25,26 in which the tubular channel members 8 will be aligned with the pusher rods 23. For further aiding in aligning the pneumatic dispatch cartridge 1, the insert 19 may be provided with centring openings 32 (figure 4) cooperating with additional means not illustrated.

The aligning means further comprise stabilising means for maintaining the pneumatic dispatch cartridge 1 in such an aligned position, said stabilising means comprising clamping members 29 (driven by, for example, a cylinder 30) for engaging the tubular body 2 of the pneumatic dispatch cartridge 1.

The cover driving means comprise stationary tabs 31,32 engaging the cover members 5 of a pneumatic dispatch cartridge 1 when latter is moved past these tabs 33,34 by the aligning means. Specifically tabs 33 will engage the cover members 5 to move these to the open position. When the pneumatic dispatch cartridge 1 has reached its position of alignment with the pusher rods 23, the open position of the cover members 5 allows the pusher rods 23 to be entered into the tubular channel members 8 (by activating the cylinder 22 for moving the pusher head 21 downwardly) for unloading blood sample tubes 9 (which will leave the pneumatic dispatch cartridge 1 at the lower side and through lower opening 28 and which thereafter will be processed further in a manner not described here). Tabs 34 then again will close the cover members 5 when the pneumatic dispatch cartridge 1 is moved further by the conveyor means.

After being unloaded the pneumatic dispatch cartridge 1 again may be entered in the pneumatic dispatch system for further use. Loading the pneumatic dispatch cartridge 1 preferably will occur manually (for example at a loading station) as is usual for other types of goods (such as bank notes).

The invention is not limited to the embodiments described before, which may be varied widely within the scope of the invention as defined by the appending claims.

## Claims

1. Pneumatic dispatch cartridge (1), comprising a substantially tubular body (2) for receiving goods to be transported, which body comprises two opposite frontal faces (3) of which at least one is provided with an access opening (4) for loading/unloading goods into/from the tubular body (2), and a cover member (5) which is movable between a closed position for closing said access opening (4) and an open position for freeing said access opening, wherein within said tubular body (2) at least one smaller tubular channel member (8) is provided extending substantially in parallel to the longitudinal axis (7) of the tubular body (2), for receiving therein at least one blood sample tube (9), **characterized in that** the tubular channel member (8) is provided with clamping means (10) for in a clamping manner holding said blood sample tube (9) in said tubular channel member (8), wherein the length of the tubular channel member (8) at least is substantially twice the length of a blood sample tube (9) to be received therein, and wherein the tubular channel member (8) is provided with two clamping means (10) spaced such that, on one hand, these clamping means engage different ones of two blood sample tubes (9), when both received in the tubular channel member (8) and, on the other hand, at least one of said clamping means (10) will engage a single blood sample tube (9), when received alone in the tubular channel member (8), irrespective the position of said single blood sample tube (9) within said tubular channel member (8).

2. Pneumatic dispatch cartridge according to claim 1, wherein each clamping means (10) comprises a leaf spring, at least partly extending into the tubular channel member (8) from the surrounding wall (11) thereof and under an acute angle with the longitudinal axis (12) of the tubular channel member (8).

3. Pneumatic dispatch cartridge according to claim 2, wherein said leaf spring (10) successively comprises a first part (13) attached to the outside of the surrounding wall (11), a second part (14) extending into the tubular channel member (8) through an aperture (18) in the surrounding wall (11) and under said acute angle with the longitudinal axis (12) of the tubular channel member (8), a third part (15) extending back through an aperture (18) in the surrounding wall (11) and under an opposite acute angle with the longitudinal axis (12) of the tubular channel member (8) and a fourth part (16) for engaging the outside of the surrounding wall (11), wherein the leaf spring (10) is preloaded for pushing the fourth part (16) against the outside of the surrounding wall (11) and wherein the apertures (18) are dimensioned for allowing a movement of the second and third parts (14;15) relative to the surrounding wall (11).

4. Pneumatic dispatch cartridge according to claim 2 or 3, wherein the apertures (18) are combined to form a single elongate aperture.

5. Pneumatic dispatch cartridge according to any of the previous claims, wherein in said tubular body (2) multiple, and preferably five tubular channel members (8) are provided extending alongside each other.

6. Pneumatic dispatch cartridge according to any of the previous claims, wherein the at least one tubular channel member (8) is defined in an insert (19) positioned within said tubular body (2).

7. Pneumatic dispatch cartridge according to claim 6, wherein the insert (19) is positioned within said tubular body (2) in a removable manner.

8. Pneumatic dispatch cartridge according to any of the previous claims, wherein both frontal faces (3) of the tubular body (2) are provided with an access opening (4) and a corresponding cover member (5).

9. Pneumatic dispatch cartridge according to any of the previous claims, wherein each cover member (5) is movable between its open and closed positions through a rotation about an axis of rotation (6) extending substantially in parallel to the longitudinal axis (7) of the tubular body (2) and positioned close to the outer circumference of said tubular body.

10. Apparatus for unloading a pneumatic dispatch cartridge (1) according to any of the previous claims and comprising two access openings (4) with respective cover members (5) and provided with multiple tubular channel members (8) arranged within the tubular body (2) according to a specific pattern, **characterized by**
- a movable pusher member (21-23) comprising a number of pusher rods (23) in correspondence with the number of tubular channel members (8) and arranged in said specific pattern,
- aligning means (24-26,29) for aligning the cartridge (1) with its tubular channel members (8) with the pusher rods (23), and
- cover driving means (33,34) for opening and closing both cover members (5).

11. Apparatus according to claim 10, wherein the pusher member comprises a pusher head (21) in which the pusher rods (23) are mounted in such a manner that when a load on a pusher rod exceeds a threshold value, said pusher rod is disconnected from the pusher head such as to no more move along therewith.

12. Apparatus according to claim 11, wherein the pusher head (21), once disconnected from the pusher rod (23), substantially does not transmit a load to said pusher rod.

13. Apparatus according to claim 11 or 12, further comprising signalling means for generating a warning signal when the pusher rod (23) is disconnected from the pusher head (21).

14. Apparatus according to any of the claims 10-13, wherein the aligning means comprise conveyer means (24-26) for conveying the pneumatic dispatch cartridge (1) in a direction (27) substantially perpendicular to its longitudinal axis (7).

15. Apparatus according to claim 14, wherein the conveyor means comprise at least a conveyor belt (24) and guide members (25,26).

16. Apparatus according to claim 14 or 15, wherein the aligning means further comprise stabilising means (29) for maintaining the pneumatic dispatch cartridge (1) in the aligned position.

17. Apparatus according to claim 16, wherein the stabilising means comprise clamping members (29) for engaging the tubular body (2) of the pneumatic dispatch cartridge (1).

18. Apparatus according to any of the claims 10-17, wherein the cover driving means comprise stationary tabs (33,34) engaging the cover members (5) of a pneumatic dispatch cartridge (1) when latter is moved past these tabs by the aligning means.

## Patentansprüche

1. Pneumatik-Versand-Kartusche (1) mit einem im Wesentlichen rohrförmigen Körper (2) zum Aufnehmen von zu transportierenden Artikeln, wobei der Körper aufweist zwei entgegengesetzte Frontenden (3), von denen wenigstens eines mit einer Zugangsöffnung (4) zum Einladen/Ausladen von Artikeln in/aus dem rohrförmigen Körper (2) versehen ist, und einem Deckelelement (5), welches zwischen einer Schließposition zum Schließen der Zugangsöffnung (4) und einer Offenposition zum Freigeben der Zugangsöffnung (4) bewegbar ist, wobei im rohrförmigen Körper (2) wenigstens ein kleineres rohrförmiges Kanalelement (8) vorgesehen ist, das sich im Wesentlichen parallel zu der Längsachse (7) des rohrförmigen Körpers (2) erstreckt, zum darin Aufnehmen wenigstens eines Blutprobenrohrs (9), **dadurch gekennzeichnet, dass** das rohrförmige Kanalelement (8) mit Klemmmitteln (10) versehen ist zum Halten des Blutprobenrohrs (9) in dem rohrförmigen Kanalelement (8) in einer klemmenden Weise, wobei die Länge des rohrförmigen Kanalelements (8) zumindest im Wesentlichen zweimal die Länge eines darin aufzunehmenden Blutprobenrohrs (9) ist, und wobei das rohrförmige Kanalelement (8) mit zwei Klemmmitteln (10), die im Abstand sind, versehen ist, sodass, einerseits, diese Klemmmittel mit unterschiedlichen von zwei Blutprobenrohren (9) im Eingriff sind, wenn beide in dem rohrförmigen Kanalelement (8) aufgenommen sind, und, andererseits, wenigstes eines der Klemmmittel (10) mit einem einzelnen Blutprobenrohr (9) in Eingriff stehen wird, wenn allein in dem rohrförmigen Kanalelement (8) aufgenommen, unabhängig von der Position des einzelnen Blutprobenrohrs (8) in dem rohrförmigen Kanalelement (8).

2. Pneumatik-Versand-Kartusche gemäß Anspruch 1, wobei jedes Klemmmittel (10) eine Blattfeder aufweist, die sich wenigstens teilweise in das rohrförmige Kanalelement (8) von der Umfangswand (11) davon aus und in einem spitzen Winkel mit der Längsachse (12) des rohrförmigen Kanalelements (8) erstreckt.

3. Pneumatik-Versand-Kartusche gemäß Anspruch 2, wobei die Blattfeder (10) sukzessive aufweist einen ersten Teil (13), der an der Außenseite der Umfangswand (11) angebracht ist, einen zweiten Teil (14), der sich durch eine Öffnung (18) in der Umfangswand hindurch in das rohrförmige Kanalelement (8) und in einem spitzen Winkel mit der Längsachse (12) des rohrförmigen Kanalelements (8) erstreckt, einen dritten Teil (15), der sich durch eine Öffnung (18) in der Umfangswand (11) zurück und in einem entgegengesetzten spitzen Winkel mit der Längsachse (12) des rohrförmigen Kanalelements (8) erstreckt, und einen vierten Teil (16) zum in Eingriff Stehen mit der Außenseite der Umfangswand (11), wobei die Blattfeder (10) vorgespannt ist zum Drücken des vierten Teils (16) gegen die Außenseite der Umfangswand (11) und wobei die Öffnungen (18) dimensioniert sind zum Erlauben einer Bewegung des zweiten und des dritten Teils (14; 15) relativ zu der Umfangswand (11).

4. Pneumatik-Versand-Kartusche gemäß Anspruch 2 oder 3, wobei die Öffnungen (18) kombiniert sind, um eine einzelne langgestreckte Öffnung zu bilden.

5. Pneumatik-Versand-Kartusche, gemäß irgendeinem der vorhergehenden Ansprüche, wobei in dem rohrförmigen Körper (2) mehrere, bevorzugt fünf, rohrförmige Kanalelemente (8) sich längs aneinander erstreckend bereitgestellt sind.

6. Pneumatik-Versand-Kartusche gemäß irgendeinem der vorhergehenden Ansprüche, wobei das wenigstens eine rohrförmige Kanalelement (8) definiert ist in einem Einsatz (19), der in dem rohrförmigen Körper (2) positioniert ist.

7. Pneumatik-Versand-Kartusche gemäß Anspruch 6, wobei der Einsatz (19) in dem rohrförmigen Körper (2) in einer entfernbaren Weise positioniert ist.

8. Pneumatik-Versand-Kartusche gemäß irgendeinem der vorhergehenden Ansprüche, wobei beide Frontenden (3) des rohrförmigen Körpers (2) mit einer Zugangsöffnung (4) und einem korrespondierenden Deckelelement (5) versehen sind.

9. Pneumatik-Versand-Kartusche gemäß irgendeinem der vorherigen Ansprüche, wobei jedes Deckelelement (5) zwischen seiner Offenposition und Schließposition durch eine Rotation um eine Rotationsachse (6) bewegbar ist, die sich im Wesentlichen parallel zu der Längsachse (7) des rohrförmigen Körpers (2) erstreckt und nahe zu dem äußeren Umfang des rohrförmigen Körpers positioniert ist.

10. Vorrichtung zum Ausladen einer Pneumatik-Versand-Kartusche (1), die gemäß irgendeinem der vorherigen Ansprüche ist und die aufweist zwei Zugangsöffnungen (4) mit jeweiligen Deckelelementen (5) und die mit mehreren rohrförmigen Kanalelementen (8) versehen ist, die im rohrförmigen Körper (2) angeordnet sind gemäß einem spezifischen Muster, **gekennzeichnet durch**
- ein bewegbares Drückelement (21-23) mit einer Anzahl von Drückerstangen (23) in Korrespondenz mit der Anzahl der rohrförmigen Kanalelemente (8) und angeordnet in diesem spezifischen Muster,
- Ausrichtungsmittel (24-26, 29) zum Ausrichten der Kartusche (1) mit deren rohrförmigen Kanalelementen (8) zu den Drückerstangen (23), und
- Deckelantriebsmittel (33, 34) zum Öffnen und Schließen beider Deckelelemente (5).

11. Vorrichtung gemäß Anspruch 10, wobei das Drückerelement einen Drückerkopf (21) aufweist, in welchem die Drückerstangen (23) in einer derartigen Weise montiert sind, dass, wenn eine Last an einer Drückerstange einen Schwellenwert überschreitet, die Drückerstange von dem Drückerkopf abgekoppelt wird, sodass sie sich nicht weiter damit mit bewegt

12. Vorrichtung gemäß Anspruch 11, wobei der Drückerkopf (21), wenn einmal von der Drückerstange (23) abgekoppelt, im Wesentlichen keine Last auf die Drückerstange überträgt.

13. Vorrichtung gemäß Anspruch 11 oder 12, ferner aufweisend Signalmittel zum Erzeugen eines Warnsignals, wenn die Drückerstange (23) von dem Drückerkopf (21) abgekoppelt ist.

14. Vorrichtung gemäß irgendeinem der Ansprüche 10-13, wobei die Ausrichtungsmittel aufweisen Fördermittel (24-26) zum Fördern der Pneumatik-Versand-Kartusche (11) in einer Richtung (27) im Wesentlichen senkrecht zu ihrer Längsachse (7).

15. Vorrichtung gemäß Anspruch 14, wobei die Fördermittel wenigstens ein Förderband (24) und Führungselemente (25, 26) aufweisen.

16. Vorrichtung gemäß Anspruch 14 oder 15, wobei die Ausrichtungsmittel ferner Stabilisierungsmittel (29) aufweisen zum Aufrechterhalten der Pneumatik-Versand-Kartusche (1) in der ausgerichteten Position.

17. Vorrichtung gemäß Anspruch 16, wobei die Stabilisierungsmittel Klemmmittel (29) zum in Eingriff Stehen mit dem rohrförmigen Körper (2) der Pneumatik-Versand-Kartusche (1) aufweisen.

18. Vorrichtung gemäß irgendeinem der Ansprüche 10-17, wobei die Deckelantriebsmittel stationäre Nasen (33, 34) aufweisen, die mit den Deckelelementen (5) einer Pneumatik-Versand-Kartusche (1) in Eingriff stehen, wenn Letztere an diesen Nasen vorbeibewegt wird durch die Ausrichtungsmittel.

## Revendications

1. Cartouche à distribution pneumatique (1) comprenant un corps sensiblement tubulaire (2) destiné à recevoir des marchandises à transporter, lequel corps comprend deux faces frontales opposées (3), dont au moins une est dotée d'une ouverture d'accès (4) pour le chargement et le déchargement de marchandises dans et depuis le corps tubulaire (2), et un élément de recouvrement (5) qui est mobile entre une position fermée pour fermer ladite ouverture d'accès (4) et une position ouverte pour libérer ladite ouverture d'accès, dans laquelle, dans ledit corps tubulaire (2), au moins un élément de canal tubulaire plus petit (8) est prévu s'étendant sensiblement parallèlement à l'axe longitudinal (7) du corps tubulaire (2), pour recevoir dedans au moins un tube d'échantillon sanguin (9), **caractérisée en ce que** l'élément de canal tubulaire (8) est doté de moyens de serrage (10) pour maintenir par serrage ledit tube d'échantillon sanguin (9) dans ledit élément de canal tubulaire (8), dans laquelle la longueur de l'élément de canal tubulaire (8) fait au moins sensiblement deux fois la longueur d'un tube d'échantillon sanguin (9) à recevoir dedans, et dans laquelle l'élément de canal tubulaire (8) est doté de deux moyens de serrage (10) espacés de sorte que, d'une part, ces moyens de serrage sont en prise avec des tubes différents parmi les deux tubes d'échantillon sanguin (9), lorsqu'ils sont reçus tous les deux dans l'élément de canal tubulaire (8) et, d'autre part, au moins l'un desdits moyens de serrage (10) sera en prise avec un seul tube d'échantillon sanguin (9), lorsqu'il sera reçu seul dans l'élément de canal tubulaire (8), quelle que soit la position dudit seul tube d'échantillon sanguin (9) dans ledit élément de canal tubulaire (8).

2. Cartouche à distribution pneumatique selon la revendication 1, dans laquelle chaque moyen de serrage (10) comprend un ressort à lame s'étendant au moins en partie dans l'élément de canal tubulaire (8) depuis la paroi environnante (11) de celui-ci et selon un angle aigu avec l'axe longitudinal (12) de l'élément de canal tubulaire (8).

3. Cartouche à distribution pneumatique selon la revendication 2, dans laquelle ledit ressort à lame (10) comprend successivement une première partie (13) attachée au côté extérieur de la paroi environnante (11), une deuxième partie (14) s'étendant dans l'élément de canal tubulaire (8) au travers d'une ouverture (18) dans la paroi environnante (11) et selon ledit angle aigu avec l'axe longitudinal (12) de l'élément de canal tubulaire (8), une troisième partie (15) remontant au travers d'une ouverture (18) dans la paroi environnante (11) et selon un angle aigu opposé avec l'axe longitudinal (12) de l'élément de canal tubulaire (8) et une quatrième partie (16) pour la mise en prise avec le côté extérieur de la paroi environnante (11), dans laquelle le ressort à lame (10) est précontraint pour pousser la quatrième partie (16) contre le côté extérieur de la paroi environnante (11) et dans laquelle les ouvertures (18) sont dimensionnées pour permettre un mouvement des deuxième et troisième parties (14 ; 15) par rapport à la paroi environnante (11).

4. Cartouche à distribution pneumatique selon la revendication 2 ou 3, dans laquelle les ouvertures (18) sont combinées pour former une seule ouverture allongée.

5. Cartouche à distribution pneumatique selon l'une quelconque des revendications précédentes, dans laquelle dans ledit corps tubulaire (2), de multiples et de préférence cinq éléments de canal tubulaire (8) sont prévus s'étendant les uns à côté des autres.

6. Cartouche à distribution pneumatique selon l'une quelconque des revendications précédentes, dans laquelle l'au moins un élément de canal tubulaire (8) est défini dans un insert (19) positionné dans ledit corps tubulaire (2).

7. Cartouche à distribution pneumatique selon la revendication 6, dans laquelle l'insert (19) est positionné dans ledit corps tubulaire (2) de manière amovible.

8. Cartouche à distribution pneumatique selon l'une quelconque des revendications précédentes, dans laquelle les deux faces frontales (3) du corps tubulaire (2) sont dotées d'une ouverture d'accès (4) et d'un élément de recouvrement correspondant (5).

9. Cartouche à distribution pneumatique selon l'une quelconque des revendications précédentes, dans laquelle chaque élément de recouvrement (5) est mobile entre ses positions ouverte et fermée par une rotation autour d'un axe de rotation (6) s'étendant sensiblement parallèlement à l'axe longitudinal (7) du corps tubulaire (2) et positionné près de la circonférence extérieure dudit corps tubulaire.

10. Appareil pour le déchargement d'une cartouche à distribution pneumatique (1) selon l'une quelconque des revendications précédentes, et comprenant deux ouvertures d'accès (4) avec des éléments de recouvrement (5) respectifs et doté de multiples éléments de canal tubulaire (8) disposés dans le corps tubulaire (2) selon un motif spécifique, **caractérisé par**
- un élément poussoir mobile (21 à 23) comprenant un nombre de tiges de poussoir (23) correspondant au nombre des éléments de canal tubulaire (8) et disposé dans ledit motif spécifique,
- des moyens d'alignement (24 à 26, 29) destinés à aligner la cartouche (1) avec ses éléments de canal tubulaire (8) avec les tiges de poussoir (23), et
- des moyens d'entraînement de recouvrement (33, 34) destinés à ouvrir et fermer les deux éléments de recouvrement (5).

11. Appareil selon la revendication 10, dans lequel l'élément poussoir comprend une tête de poussoir (21), dans laquelle les tiges de poussoir (23) sont montées de telle manière que lorsqu'une charge sur une tige de poussoir excède une valeur seuil, ladite tige de poussoir est déconnectée de la tête de poussoir de sorte à ne plus se déplacer le long de celle-ci.

12. Appareil selon la revendication 11, dans lequel la tête de poussoir (21), une fois déconnectée de la tige de poussoir (23), ne transmet sensiblement aucune charge à ladite tige de poussoir.

13. Appareil selon la revendication 11 ou 12, comprenant en outre des moyens de signalisation pour générer un signal d'avertissement lorsque la tige de poussoir (23) est déconnectée de la tête de poussoir (21).

14. Appareil selon l'une quelconque des revendications 10 à 13, dans lequel les moyens d'alignement comprennent des moyens de transport (24 à 26) pour transporter la cartouche à distribution pneumatique (1) dans une direction (27) sensiblement perpendiculaire à son axe longitudinal (7).

15. Appareil selon la revendication 14, dans lequel les moyens de transport comprennent au moins une courroie de transport (24) et des éléments de guidage (25, 26).

16. Appareil selon la revendication 14 ou 15, dans lequel les moyens d'alignement comprennent en outre des moyens de stabilisation (29) pour maintenir la cartouche à distribution pneumatique (1) dans la position alignée.

17. Appareil selon la revendication 16, dans lequel les moyens de stabilisation comprennent des éléments de serrage (29) pour la mise en prise avec le corps tubulaire (2) de la cartouche à distribution pneumatique (1).

18. Appareil selon l'une quelconque des revendications 10 à 17, dans lequel les moyens d'entraînement de recouvrement comprennent des pattes stationnaires (33, 34) mettant en prise les éléments de recouvrement (5) d'une cartouche à distribution pneumatique (1) lorsque cette dernière est déplacée au-delà de ces pattes par les moyens d'alignement.
